# EUROPEAN PATENT SPECIFICATION

(11) **EP 2 664 381 B1**
(45) Date of publication and mention of the grant of the patent: **13.04.2022**
(21) Application number: 13002588.5
(22) Date of filing: 16.05.2013
(51) Int. Cl.: B01L 3/00, G01N 35/00, G01N 35/04

(54) **Analysis cartridge**
Kassette für Analyse
Cartouche d'analyse

(30) Priority: 18.05.2012 CN 201210155013
(43) Date of publication of application: 20.11.2013
(73) Proprietor: Skyla Corporation Hsinchu Science Park Branch, Hsinchu City 30078 (TW)
(72) Inventor: Lai, Cheng-Chang, 300 Hsinchu (TW); Huang, Fu-Chun, 300 Hsinchu (TW); Lin, Yuh-Jiuan, 300 Hsinchu (TW)
(74) Representative: Schmidt, Steffen J.

(56) References cited:
- US-A- 5 061 381
- US-A1- 2007 059 817
- US-A1- 2012 270 305

## Description

### BACKGROUND OF THE INVENTION

### Field of the Invention

The invention relates in general to an analysis cartridge, and more particularly to the design of a sealing film of an analysis cartridge.

### Description of the Related Art

The in vitro diagnostic testing process comprises the following operation sequence: (1) a test specimen is infused; (2) the test specimen is diluted; (3) the test specimen is mixed with a reagent; (4) an optical signal is measured. The main purpose of diluting the test specimen is for reducing the disruptor and increasing the volume of the specimen so that a multi-objective test can be performed on a tiny quantity of test specimen. Therefore, the diluent will be mixed with the test specimen according to a particular proportion.

Of the products currently available in the market, a diluent box pre-filled with a diluent is packaged in an analysis cartridge. After the analysis cartridge is loaded into an analyzer, the mechanism design of the analyzer opens an opening of the diluent box for allowing the diluent pre-filled in the diluent box to flow out the diluent box to be mixed with the test specimen in the analysis cartridge so that the test specimen can be diluted.

In the United States Patent No. US 5304348, an analytical rotor which comprises a receptacle for receiving a post on a centrifuge and a sealed rigid container in the rotor body proximate to the receptacle is provided. The seal on the container is opened when the post is inserted in the receptacle, thereby releasing a liquid in the container. The seal is preferably opened through the displacement of the container caused by positioning of the rotor on the centrifuge post.

In the United States Patent No. 5457053, an analytical rotor which comprises a receptacle for receiving a post on a centrifuge and means in the rotor body proximate to the receptacle for releasing a liquid in response to mounting the rotor in the centrifuge is disclosed. The means for releasing the liquid is preferably a sealed container shiftably positioned in a chamber proximate the receptacle.

In the United States Publication No. 2007/0059817, a biochemical reaction cassette 31 is disclosed which comprises a housing 32, a reaction chamber 34 and a sealing member 44, wherein the sealing member 44 is bonded to cover the hole 42 and the another hole 43. In this disclosure, a hole making means 46 and 47 is needed for cutting the sealing member 44 that covers the holes 42 and 43 of the biochemical reaction cassette 31 to produce holes through it.

In the United States Patent No. 5,061,381, a centrifugal rotor 10 is disclosed to comprise a top layer 12, middle layer 14, and bottom layer 16, wherein the upper surface of middle layer 14 includes a plurality of chambers and passages formed therein including a reagent chamber 80. This disclosure describes that it may be desirable to provide a removable seal or barrier in chamber 82, or contain the reagent within a pouch or other package, to preserve the reagent and further assure that the reagent will not leak from chamber 80. There is no description about the details of the structure of removable seal.

However, the procedure of opening the diluent box disclosed in above arts requires a complicated mechanism design, which not only increases the operation complexity, but further increases the size and weight of the analyzer.

### SUMMARY OF THE INVENTION

The invention is directed to an analysis cartridge, which dispenses with a mechanism of opening a liquid through hole of a liquid storage box so as to effectively reduce cost and increase market competitiveness.

An analysis cartridge according to the present invention is defined in claim 1.

According to an embodiment of the present invention, the cartridge may have an accommodation portion, and the liquid storage box (130) may be disposed in the accommodation portion of the cartridge. According to another embodiment of the present invention, the cartridge and the first cover are integrated into one piece.

The invention will become better understood with regard to the following detailed description made with reference to the accompanying drawings. The scope of the invention is defined by the appended claims.

### BRIEF DESCRIPTION OF THE DRAWINGS

FIG. 1 shows an explosion diagram of an analysis cartridge according to an embodiment of the invention;
FIG. 2 shows an assembly diagram of a cartridge, a liquid storage box, a second cover and a sealing film of FIG. 1;
FIG. 3 shows a schematic diagram of the sealing film of FIG. 2 being torn apart and exposing the liquid through hole;
FIG. 4 shows a cross-sectional view along a direction 4-4' of FIG. 2;
FIG. 5 shows a cross-sectional view along a direction 5-5' of FIG. 2;
FIG. 6 shows a partial enlargement diagram of a portion 6' of FIG. 2;
FIG. 7 shows an explosion diagram of an analysis cartridge according to an example which does not fall under the scope of the invention;
FIG. 8 shows an assembly diagram of a cartridge, a liquid storage box and a sealing film of FIG. 7; and
FIG. 9 shows a cross-sectional view along a direction 9-9' of FIG. 8.

### DETAILED DESCRIPTION OF THE INVENTION

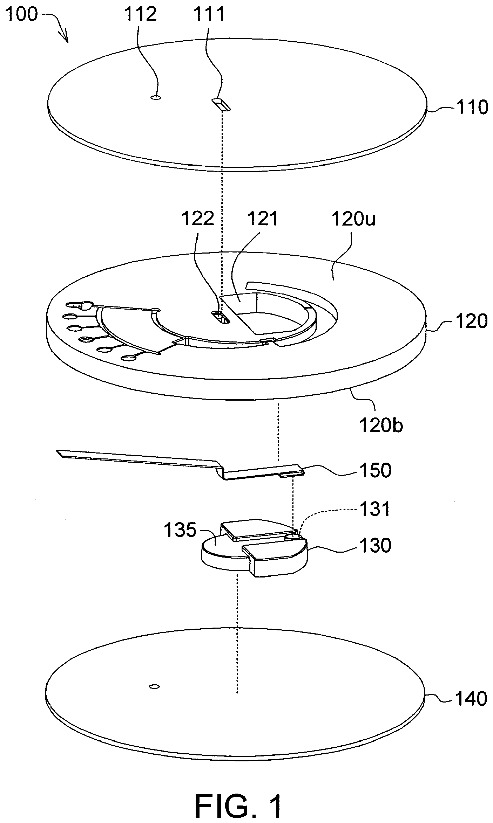

Referring to FIG. 1, an explosion diagram of an analysis cartridge according to an embodiment of the invention is shown. The analysis cartridge 100 comprises a first cover 110, a cartridge 120, a liquid storage box 130, a second cover 140 and a sealing film 150.

In present embodiment, the first cover 110 and the cartridge 120 are two separate components. In another embodiment, at least two of the first cover 110, the cartridge 120 and the liquid storage box 130 are integrated into one body.

The first cover 110 covers a first surface 120u of the cartridge 120 and has an opening 111. In present embodiment, the opening 111 is a first through hole, and the sealing film 150 is configured to pass through the first through hole. In another embodiment, the first cover 110 does not cover whole the first surface 120u of the cartridge 120 to expose the sealing film 150, such that the sealing film 150 can be extended upward and through the first cover 110.

The first cover 110 may be formed by a high polymer such as polypropylene (PP) or polymethylmethacrylate (PMMA). Under such design, the first cover 110 may be bonded to the cartridge 120 by hot melting method or ultra-sound bonding technology. Alternatively, the first cover 110 may be formed by an adhesive material such as an adhesive tape. Under such design, the first cover 110 may be adhered on the cartridge 120.

The cartridge 120 has an accommodation portion 121, an opening 122, and a first surface 120u and a second surface 120b opposite to the first surface 120u. The cartridge 120 may be formed by plastics such as polypropylene. In the invention, the opening 122 is a second through hole 122, and the sealing film 150 is configured to pass through the second through hole. In another example, the opening 122 and the accommodation portion 121 can be integrated into one through hole.

The liquid storage box 130, used for storing a diluent, can be contained within the accommodation portion 121 of the cartridge 120. The liquid storage box 130 has an opening, such as a liquid through hole 131 via which the diluent flows out the liquid storage box 130 to be mixed with the test specimen. The sealing film 150 seals the unvented liquid storage chamber 130r disposed inside the liquid storage box 130 by sealing the liquid through hole 131 of the liquid storage box 130 to avoid the diluent flowing out when analysis is not performed.

The liquid storage box 130 is shaped into a structure as illustrated in FIG. 1. In another example, the liquid storage box 130 is shaped into another structure different from that of FIG. 1. In another example, a protrusion 135 of the liquid storage box 130 can be omitted. Alternatively, the liquid storage box 130 can be shaped into a block having a cross-section of a circular-shape, a semicircular-shape, a rectangular-shape or a polygonal-shape.

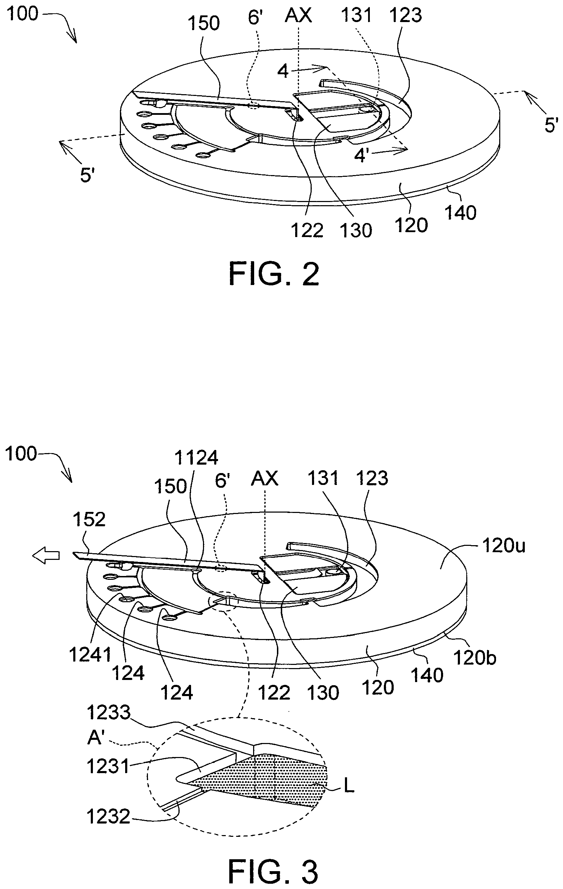

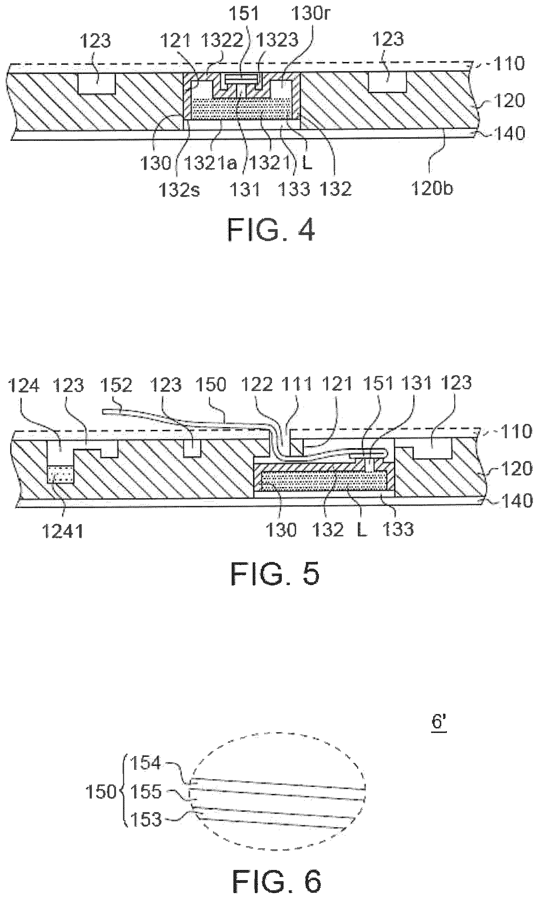

Referring to FIG. 2, an assembly diagram of a cartridge, a liquid storage box, a second cover and a sealing film of FIG. 1 is shown. The accommodation portion 121 may contain the liquid storage box 130. When analysis is not performed, the liquid through hole 131 of the liquid storage box 130 is sealed by the sealing film 150 to avoid the diluent L (FIG. 4) inside the liquid storage box 130 flowing out via the liquid through hole 131.

Referring to FIG. 3, a schematic diagram of the sealing film of FIG. 2 being torn apart and exposing the liquid through hole is shown. When analysis is performed, the operator may pull a second terminal 152 of the sealing film 150 to expose the sealed liquid through hole 131 and the unvented liquid storage chamber 130r (FIG. 4). Then, after the analysis cartridge 100 is loaded into an analyzer (not illustrated), the analyzer drives the analysis cartridge 100 to rotate around the axis AX, so that the diluent L stored in an unvented liquid storage chamber 130r of the liquid storage box 130 (FIG. 4) is driven by a centrifugal force to flow out and enter liquid channel 123 via the exposed liquid through hole 131. In addition, the axis AX is such as the center of the analysis cartridge 100.

The cartridge 120 further has at least one reaction chamber 124, wherein the liquid channel 123 interconnects the reaction chamber 124 with the liquid through hole 131 and the unvented liquid storage chamber 130r (FIG. 4) of the liquid storage box 130, such that the diluent L inside the liquid storage box 130 may flow to the reaction chamber 124 via the liquid through hole 131 and the liquid channel 123 to react with the reactive substance 1241 stored in the reaction chamber 124. Although not illustrated, the first cover 110 covers the reaction chamber 124 and the liquid channel 123. In the present embodiment, the reaction chamber 124 and the liquid channel 123 are formed on two opposite sides with respect to the accommodation portion 121 (as illustrated in FIG. 1). In another embodiment, the reaction chamber 124 and the liquid channel 123 are formed on the same side with respect to the accommodation portion 121.

In the present example, the reaction chamber 124 is realized by a blind hole (referring to FIG. 5). In another example, the reaction chamber 124 is realized by a through hole. Despite the reaction chamber 124 is a through hole, the reactive substance 1241 inside the reaction chamber 124 is blocked by the second cover 140 (FIG. 5) and will not flow out.

As indicated in an enlargement diagram of FIG. 3, the liquid channel 123 has a liquid accumulation tank 1231, a first distribution channel 1232 and a second distribution channel 1233, wherein the first distribution channel 1232 and the second distribution channel 1233 are connected to the liquid accumulation tank 1231. Through the design of the distance between the first distribution channel 1232 and the axis AX, the flow of the diluent L entering the first distribution channel 1232 from the liquid accumulation tank 1231 can be controlled, so that the predetermined or expected reaction between the diluent L and the reactive substance 1241 inside the reaction chamber 124 can be achieved.

Since the distance between the first distribution channel 1232 and the axis AX is larger than that between the second distribution channel 1233 and the axis AX, the centrifugal force driving the diluent L in the first distribution channel 1232 is larger than the centrifugal force driving the diluent L in the second distribution channel 1233, making most or all of the diluent L inside the liquid accumulation tank 1231 enter the first distribution channel 1232 and flow to the reaction chamber 124. In addition, the second distribution channel 1233 interconnects with the ventilation hole 112 of the first cover 110, so that the gas inside the liquid channel 123 may be discharged off the analysis cartridge 100 through the second distribution channel 1233 and the ventilation hole 112 of the first cover 110 (FIG. 1).

Referring to FIG. 4, a cross-sectional view along a direction 4-4' of FIG. 2 is shown. The liquid storage box 130 is disposed within the accommodation portion 121. In an embodiment of the invention, the outer diameter of the liquid storage box 130 is larger than the inner diameter of the accommodation portion 121, such that the liquid storage box 130 is tightly located within the accommodation portion 121. In another embodiment, the liquid storage box 130 is bonded to the first cover 110 by using such as hot melting method or ultra-sound bonding technology. Under such design, the outer diameter of the liquid storage box 130 does not have to be larger than the inner diameter of the accommodation portion 121. Instead, the outer diameter of the liquid storage box 130 may be smaller than or equal to the inner diameter of the accommodation portion 121.

The liquid storage box 130 comprises a box body 132 and a tank cover 133. The box body 132 further has a liquid storage tank 1321 and a tank bottom 1322. The liquid storage tank 1321 extends to the tank bottom 1322 from the terminal surface 132s. The tank bottom 1322 faces the first cover 110. The liquid through hole 131 penetrates the tank bottom 1322 and interconnects with the liquid storage tank 1321. The tank cover 133 is adhered on a terminal surface 132s of the box body 132 to cover an opening 1321a of the liquid storage tank 1321 which is exposed from the terminal surface 132s. In other words, the liquid storage tank 1321 has an opening facing the second surface 120b of the cartridge 120, and the tank cover 133 covers the opening of the liquid storage tank 1321. The tank cover 133 is formed by a metal or a high polymer, wherein the metal is such as aluminum, and the high polymer is such as plastics.

In the present embodiment, the tank bottom 1322 of the box body 132 has a flange 1323, and the liquid through hole 131 penetrates the flange 1323. Through the design of the flange 1323, the sealing film 150 seals the liquid through hole 131 more tightly.

The second cover 140 covers a surface that is not covered by the first cover 110. For example, the second surface 120b of the cartridge 120. The second cover 140 and the first cover 110 may be formed by similar materials, and the similarities are not repeated here. In addition, the second cover 140 and the first cover 110 may be formed by the same material or different materials. In addition, the second cover 140 is bonded to the cartridge 120 by using such as hot melting method, ultra-sound bonding technology or adhering method.

Referring to FIG. 5, a cross-sectional view along a direction 5-5' of FIG. 2 is shown. In the present embodiment, the sealing film 150 is strip-shaped. The sealing film 150 passes through the first cover 110 through the opening 122 of the cartridge 120 and the opening 111 of the first cover 110. In present embodiment, the second terminal 152 of the sealing film 150 is upward extended out of the cartridge 120. For more detail, a first terminal 151 of the sealing film 150 attached on the liquid through hole 131 of the liquid storage box 130 to seal the unvented liquid storage chamber 130r, and the sealing film 150 is folded so that a portion of the sealing film 150 overlaps the first terminal 151 of the sealing film 150 as shown in FIG. 5.

The second terminal 152 of the sealing film 150 penetrates the opening 122 and the opening 111 by way of reversely bending the sealing film 150 near the first terminal 151 of the sealing film 150. To put it in greater details, the first terminal 151 of the sealing film 150 is reversely bended after sealing the liquid through hole 131, so that the second terminal 152 of the sealing film 150 passes through the first cover 110 through the opening 122 and the opening 111. In addition, the sealing film 150 may seal the liquid through hole 131 by using hot melt method.

Referring to FIG. 6, a partial enlargement diagram of a portion 6' of FIG. 2 is shown. The sealing film 150 is such as a multi-layer structure. For example, the sealing film 150 comprises a bonding layer 153, a metal layer 154 and an adhesive layer 155.

The bonding layer 153 seals the liquid through hole 131, and the adhesive layer 155 is formed between the bonding layer 153 and the metal layer 154 for bonding the bonding layer 153 to the metal layer 154. In an embodiment, the bonding layer 153 and the cartridge 120 may be formed by the same material such as polypropylene (PP) or polyethylene terephthalate (PET). During the hot melt process, after the bonding layer 153 reaches the glass transition temperature, the bonding layer 153 may be bonded to the liquid storage box 130.

The metal layer 154 is formed by a metal having superior thermal conductivity such as aluminum or other metal. Due to the superior thermal conductivity, the thermal conductive layer 154, without contacting the sealing film 150, may transmit the heat to the bonding layer 153 via the metal layer 154 for heating the bonding layer 153.

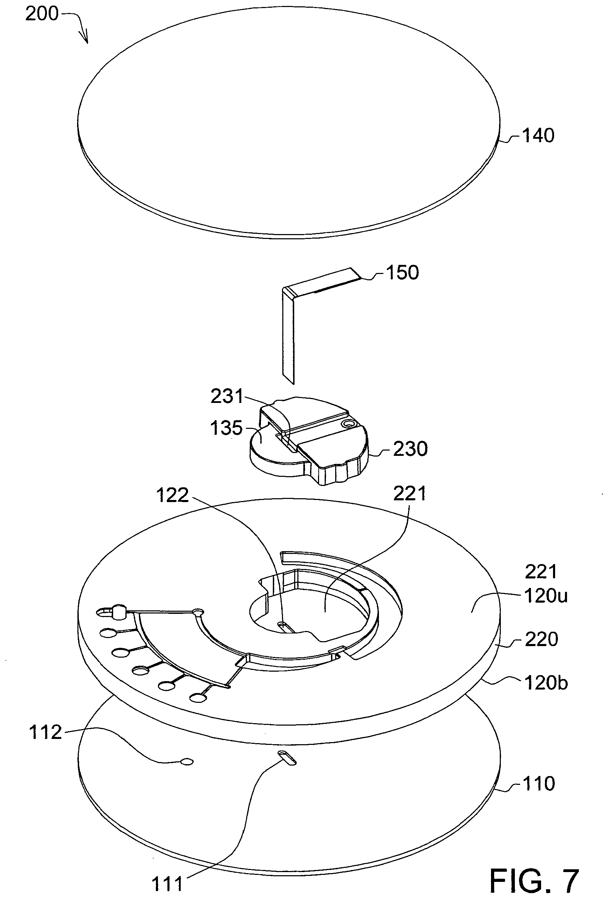

Referring to FIG. 7, an explosion diagram of an analysis cartridge according to an example which does not fall under the scope of the invention is shown. The analysis cartridge 200 comprises a first cover 110, a cartridge 220, a liquid storage box 230, a second cover 140 and a sealing film 150.

The first cover 110 covers a second surface 120b of the cartridge 220. The cartridge 220 further has an opening 122. In comparison to the liquid storage box 130, the liquid storage box 230 has an opening 231, such as a third through hole, and the sealing film 150 can pass through the third through hole. In another example, the protrusion 135 of the liquid storage box 230 can be omitted. The second cover 140 covers the first surface 120u of the cartridge 220.

The cartridge 220 further comprises a carrying plate 221 to avoid the liquid storage box 230 separating from the cartridge 220. Under such design, the first cover 110 can be omitted. In another example, the carrying plate 221 can be omitted.

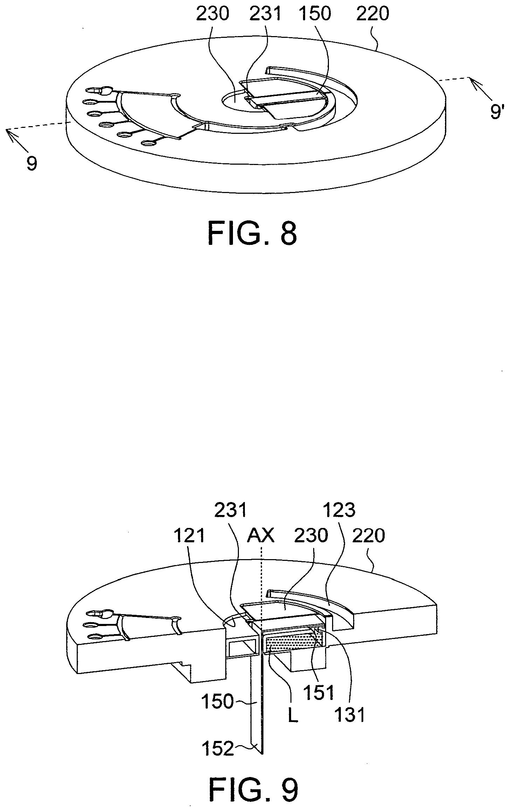

Referring to FIG. 8 and 9, FIG. 8 shows an assembly diagram of a cartridge, a liquid storage box and a sealing film of FIG. 7. FIG. 9 shows a cross-sectional view along a direction 9-9' of FIG. 8.

The liquid storage box 230 is contained within the accommodation portion 121 of the cartridge 220. The first terminal 151 of the sealing film 150 seals the liquid through hole 131, and the second terminal 152 of the sealing film 150 passes through the first cover 110 through the third through hole 231, the opening 122 and the opening 111 (the opening 111 and the first cover 110 are not illustrated in FIGS. 8 and 9). In present example, the second terminal 152 of the sealing film 150 is downward extended out of the cartridge 220.

When analysis is performed, the operator may pull the second terminal 152 of the sealing film 150 for exposing the sealed liquid through hole 131. Then, after the analysis cartridge 100 is loaded into an analyzer (not illustrated), the analyzer drives the analysis cartridge 100 to rotate around the axis AX, so that the diluent L stored in the liquid storage box 230 is driven by the centrifugal force to flow to the liquid channel 123 through the exposed liquid through hole 131. In addition, the axis AX is such as the center of the cartridge 220.

## Claims

1. An analysis cartridge (100, 200) comprising:
a sealing film (150), a cartridge (120) having a first surface (120u) and a second surface (120b), and a first cover (110) covering the first surface (120u), said cover (110) having a through hole (111), said cartridge having:
- an opening (122),
- a liquid storage box (130) with an unvented liquid storage chamber (130r) disposed therein for storing a diluent (L), said liquid storage box (130) having a liquid through-hole (131),
- a liquid channel (123), and
- at least one reaction chamber (124) for storing a reactive substance (1241),
wherein the liquid channel (123) interconnects the at least one reaction chamber (124) with the unvented liquid storage chamber (130r) via said liquid through hole (131);
wherein the sealing film (150) is configured to pass through the through hole (111) of the first cover (110) and through the opening (122) of the cartridge (120);
wherein a first terminal (151) of the sealing film (150) is configured to seal the unvented liquid storage chamber (130r) by sealing the through-hole (131) of the liquid storage box (130) to avoid diluent flowing out when analysis is not yet performed, and a second terminal (152) of the sealing film (150) is configured to be pulled by an operator to expose the liquid through hole (131) and the unvented storage chamber (130r) when analysis is performed;
wherein the sealing film (150) penetrates the opening (122) and the through hole (111) by way of reversely bending the sealing film (150) when analysis is not yet performed;
and wherein, when analysis is not yet performed, the first terminal (151) of the sealing film (150) has a folded portion which overlaps the through hole (131), and the second terminal (152) is configured to pass through the through hole (111) of the first cover (110) and through the opening (122), such to be upward extended out of the cartridge (120).

2. The analysis cartridge (100, 200) according to claim 1, wherein the cartridge (120) has an accommodation portion (121), and the liquid storage box (130) is disposed in the accommodation portion (121) of the cartridge (120).

3. The analysis cartridge according to claim 1 or 2, wherein the cartridge and the first cover are integrated into one piece.

## Patentansprüche

1. Eine Analysekassette (100, 200), die Folgendes umfasst:
eine Dichtungsfolie (150), eine Kartusche (120) mit einer ersten Oberfläche (120u) und einer zweiten Oberfläche (120b) und eine erste Abdeckung (110), die die erste Oberfläche (120u) bedeckt, wobei die Abdeckung (110) ein Durchgangsloch (111) aufweist, wobei die Kartusche aufweist:
- eine Öffnung (122),
- einen Flüssigkeitsspeicherkasten (130) mit einer darin angeordneten unbelüfteten Flüssigkeitsspeicherkammer (130r) zum Speichern eines Verdünnungsmittels (L), wobei der Flüssigkeitsspeicherkasten (130) ein Flüssigkeitsdurchgangsloch (131) aufweist,
- einen Flüssigkeitskanal (123), und
- mindestens eine Reaktionskammer (124) zur Lagerung einer reaktiven Substanz (1241),
wobei der Flüssigkeitskanal (123) die mindestens eine Reaktionskammer (124) mit der unbelüfteten Flüssigkeitsspeicherkammer (130r) über das Flüssigkeitsdurchgangsloch (131) verbindet;
wobei die Dichtungsfolie (150) so konfiguriert ist, dass sie durch das Durchgangsloch (111) der ersten Abdeckung (110) und durch die Öffnung (122) der Kartusche (120) hindurchgeht;
wobei ein erstes Ende (151) der Abdichtungsfolie (150) so konfiguriert ist, dass es die nicht belüftete Flüssigkeitsspeicherkammer (130r) abdichtet, indem es das Durchgangsloch (131) des Flüssigkeitsspeicherkastens (130) abdichtet, um zu verhindern, dass Verdünnungsmittel herausfließt, wenn noch keine Analyse durchgeführt wird, und ein zweites Ende (152) der Abdichtungsfolie (150) so konfiguriert ist, dass es von einem Bediener gezogen wird, um das Flüssigkeitsdurchgangsloch (131) und die nicht belüftete Speicherkammer (130r) freizulegen, wenn die Analyse durchgeführt wird;
wobei die Abdichtungsfolie (150) die Öffnung (122) und das Durchgangsloch (111) durch Rückbiegen der Abdichtungsfolie (150) durchdringt, wenn noch keine Analyse durchgeführt wird;
und wobei, wenn die Analyse noch nicht durchgeführt wird,
das erste Ende (151) der Abdichtungsfolie (150) einen gefalteten Abschnitt aufweist, der das Durchgangsloch (131) überlappt, und das zweite Ende (152) so konfiguriert ist, dass es durch das Durchgangsloch (111) der ersten Abdeckung (110) und durch die Öffnung (122) hindurchgeht, so dass es nach oben aus der Kartusche (120) herausragt.

2. Analysekartusche (100, 200) nach Anspruch 1, wobei die Kartusche (120) einen Aufnahmeabschnitt (121) aufweist und der Flüssigkeitsspeicherbehälter (130) in dem Aufnahmeabschnitt (121) der Kartusche (120) angeordnet ist.

3. Analysepatrone nach Anspruch 1 oder 2, wobei die Kartusche und die erste Abdeckung in einem Stück integriert sind.

## Revendications

1. Cartouche d'analyse (100, 200) comprenant :
un film d'étanchéité (150), une cartouche (120) ayant une première surface (120u) et une seconde surface (120b), et un premier couvercle (110) recouvrant la première surface (120u), ledit couvercle (110) ayant un trou traversant (111), ladite cartouche ayant :
- une ouverture (122),
- une boîte de stockage de liquide (130) avec une chambre de stockage de liquide non ventilée (130r) disposée dans celle-ci pour stocker un diluant (L), ladite boîte de stockage de liquide (130) ayant un trou de passage de liquide (131),
- un canal de liquide (123), et
- au moins une chambre de réaction (124) pour stocker une substance réactive (1241),
dans lequel le canal de liquide (123) interconnecte la au moins une chambre de réaction (124) avec la chambre de stockage de liquide non ventilée (130r) via ledit trou de passage de liquide (131) ;
dans lequel le film d'étanchéité (150) est configuré pour passer à travers le trou traversant (111) du premier couvercle (110) et à travers l'ouverture (122) de la cartouche (120) ;
dans lequel une première borne (151) du film de scellement (150) est configurée pour sceller la chambre de stockage de liquide non ventilée (130r) en scellant le trou traversant (131) de la boîte de stockage de liquide (130) pour éviter que le diluant ne s'écoule lorsque l'analyse n'est pas encore effectuée, et une seconde borne (152) du film de scellement (150) est configurée pour être tirée par un opérateur pour exposer le trou traversant de liquide (131) et la chambre de stockage non ventilée (130r) lorsque l'analyse est effectuée ;
dans lequel le film d'étanchéité (150) pénètre dans l'ouverture (122) et le trou traversant (111) par le biais d'une courbure inverse du film d'étanchéité (150) lorsque l'analyse n'est pas encore effectuée ;
et dans lequel, lorsque l'analyse n'est pas encore effectuée,
la première borne (151) du film d'étanchéité (150) a une partie pliée qui chevauche le trou traversant (131), et la seconde borne (152) est configurée pour passer à travers le trou traversant (111) du premier couvercle (110) et à travers l'ouverture (122), de manière à être étendue vers le haut hors de la cartouche (120).

2. Cartouche d'analyse (100, 200) selon la revendication 1, dans laquelle la cartouche (120) a une partie de logement (121), et la boîte de stockage de liquide (130) est disposée dans la partie de logement (121) de la cartouche (120).

3. Cartouche d'analyse selon la revendication 1 ou 2, dans laquelle la cartouche et le premier couvercle sont intégrés en une seule pièce.
